# EUROPEAN PATENT APPLICATION

(11) **EP 1 327 812 A2**
(43) Date of publication of application: **16.07.2003**
(21) Application number: 02028700.9
(22) Date of filing: 23.12.2002
(51) Int. Cl.: F16L 37/084, A47L 9/24

(54) **Corrugated tubing assembly with integrated quick connector**

(30) Priority: 10.01.2002 US 44058
(71) Applicant: Holm Industries, Inc., Scottsburg, Indiana 47170 (US)
(72) Inventor: Heverly, Wayne, T., Cuyahoga Falls, OH 44221-3521 (US)
(74) Representative: Fritsche, Rainer, Dipl.-Wirtsch.-Ing.

(57) **Abstract**

Integrated quick connect tubing that includes a quick connect retainer (12) that is integrated as a cuff into corrugated tubing (14), most preferably corrugated tubing fabricated from a rigid plastic. The quick connect retainer (12) is preferably fabricated from polypropylene and is most preferably spin welded to the interior of a sleeve (18) at one or both ends of the corrugated tubing (14) to attach the quick connect stepped body or retainer (12) to one or both ends of the corrugated tubing (14).

## Description

### Background and Summary of the Invention

The present invention relates generally to new and novel improvements in integrated quick connect corrugated tubing. More particularly, the present invention relates to integrated quick connect corrugated tubing that incorporates at least one quick connect connector on one or both ends of the corrugated tubing for use in major appliance applications.

Quick connect connectors have found wide acceptance in various applications to facilitate rapid connection and disconnection to join, for example, tubing to other devices. However, these known prior art connectors for tubing have disadvantages that limit their application in major appliance applications. These disadvantages include having a substantially constant inside and outside diameter and, thus, their length cannot be readily adjusted to accommodate variations in the distance between appliances and associated components. In addition, various connectors have been used in conjunction with corrugated tubing. These prior art connectors also have disadvantages that limit their application in major appliance applications including that they do not utilize quick connect connectors, they can be difficult and/or expensive to fabricate, and/or they can be difficult to use.

Accordingly, an object of the present invention is the provision of integrated quick connect tubing that incorporates a quick connect connector on one or both ends of corrugated or other tubing for use in major appliance applications. This and other objects of the present invention are attained by integrated quick connect tubing that includes a quick connect retainer that is integrated as a cuff into appropriate tubing.

Other advantages and novel features of the present invention will become apparent in the following detailed description of the invention when considered in conjunction with the accompanying drawings.

### Brief Description Of The Drawings

FIG. 1 is an elevational schematic representation, partially in cross-section, of an integrated quick connect tubing assembly according to the present invention;

FIG. 2 is an elevational schematic representation of an integrated quick connect tubing assembly and appropriate fitting according to the present invention;

FIG. 3 is an elevational schematic representation of an integrated quick connect tubing assembly according to the present invention;

FIG. 4 is a perspective view of a household washing machine illustrating one use of the integrated quick connect tubing assembly shown in FIG. 1; and

FIG 5 is a cross-sectional view of a second embodiment of an integrated quick connect tubing assembly according to the present invention.

### Detailed Description Of The Invention

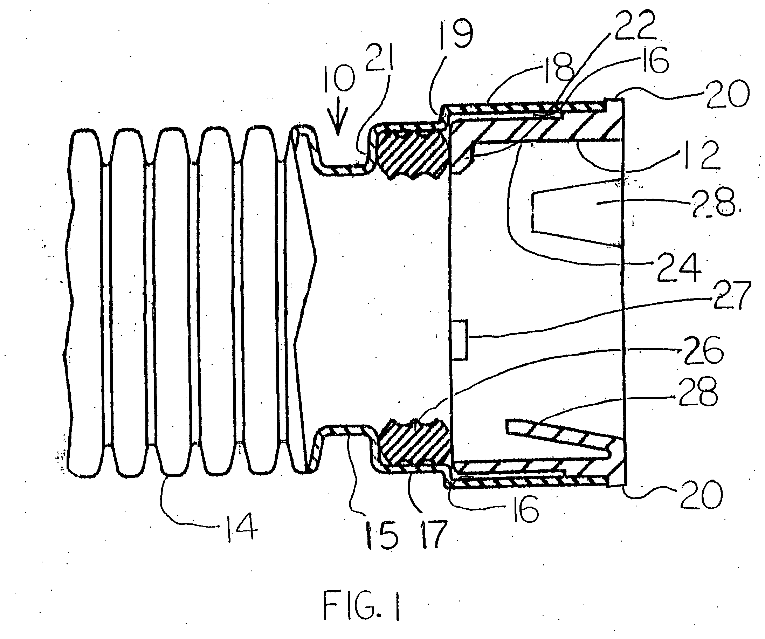

FIG. 1 is an elevational schematic representation of an integrated quick connect tubing assembly 10 according to the present invention. Integrated quick connect tubing assembly 10 preferably includes quick connect sleeve 18, which is preferably monolithically formed as a cuff with corrugated tubing 14. In addition to corrugated tubing, integrated quick connect sleeve 18 can be formed with other types of tubing, such as a flexible smooth wall tubing. In one embodiment, integrated quick connect tubing assembly 10 may be fabricated from appropriate rigid plastic including polypropylene.

Sleeve 18 is normally formed from the same material as tubing 14 and may be fabricated from appropriate plastic including polypropylene. Sleeve 18 is stepped in three varying diameters with the smallest diameter step immediately adjacent to the corrugated tubing.

Quick connect stepped retainer 12 may be fabricated from appropriate rigid plastic including polypropylene. Quick connect stepped retainer 12 is also preferably fabricated from the same or substantially the same polymer as tubing assembly 10 and is most preferably spin welded to interior surface 16 of the largest diameter step of the sleeve 18. Sleeve 18 preferably has a stepped circular interior comprising a quick connect retainer having three different diameters. The second diameter 17 is a seal portion, the second diameter being smaller than the first diameter. The third diameter 15 is a seal retaining portion, the third diameter 15 being smaller than the second diameter. The seal portion 17 is between the quick connect retainer portion 24 and the seal retaining portion 15 and is monolithic with the length of corrugated tubing 14. The sleeve 18 preferably is monolithically fabricated with corrugated tubing 14 at one or both ends of corrugated tubing 14 with quick connect retainer 12 attached to one or both ends of corrugated tubing 14. In addition, other methods of joining quick connect retainer 12 within interior surface 16 of sleeve 18 could be used including, for example, a sonic weld, an adhesive and/or an interference fit.

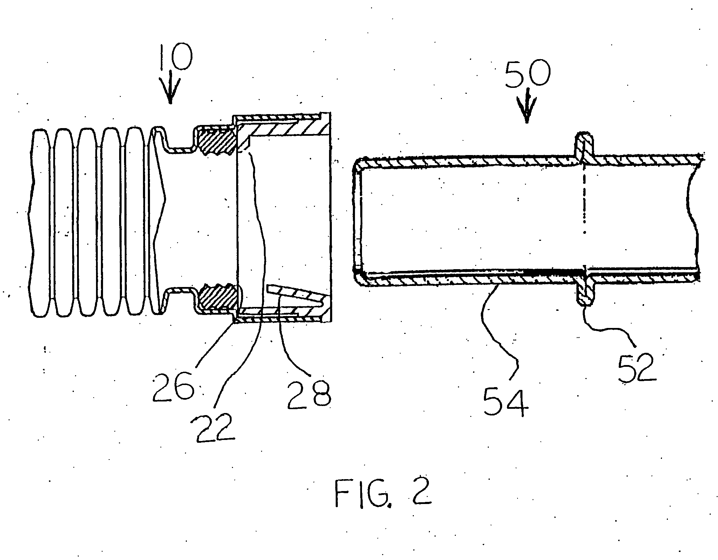

Quick connect retainer 12 preferably includes outwardly extending flange 20 integrally formed in an outward portion thereof to control the axial positioning of quick connect retainer 12 relative to sleeve 18. In addition, quick connect retainer 12 also includes an inwardly extending flange 22 integrally formed in an inward portion thereof. Preferably, inwardly extending flange 22 consists of a plurality of discontinuous segments 27. Inwardly extending flange 22 abuts shoulder 19. An appropriate fitting 50 (see FIG. 2) may be a pump port or drain connector adapted for use with integrated quick connect tubing assembly 10. Intermediate wall portion 24 extends between and joins outwardly extending flange 20 and inwardly extending flange 22 in quick connect retainer 12. A sealing ring 26 is positioned between shoulder 21 and flange 22. Sealing ring 26 is preferably fabricated from appropriate thermoplastic elastomers or rubbers. The outside diameter of intermediate wall portion 24 of quick connect retainer 12 is preferably slightly smaller than the inside diameter of sleeve 18 to allow quick connect stepped body or retainer 12 to be inserted into and positioned inside of sleeve 18. A slight interference fit is required if spin welding or sonic welding is used.

Quick connect retainer 12 further preferably includes a plurality of flexible fingers 28 extending inwardly at an angle in order to connect integrated quick connect tubing assembly 10 to an appropriate fitting 50. The interior of quick connect retainer 12 could utilize a variety of quick connect designs to facilitate connection to and disconnection from other components that are well known in the industry. In addition, the length of corrugated tubing 14 may be readily increased or decreased as needed to accommodate variations in the distance between components to be joined by integrated quick connect corrugated tubing assembly 10.

Integrated quick connect corrugated tubing assembly 10 is preferably fabricated by inserting quick connect stepped body or retainer 12 into sleeve 18 into position such that outwardly extending flange 20 of quick connect retainer 12 abuts upon the end of sleeve 18. Quick connect retainer 12 is secured in this position by, most preferably, a spin weld, although other joining methods could alternatively be used, for example, a sonic weld, an adhesive and/or an interference fit.

FIG. 2 is an elevational schematic representation of an integrated quick connect tubing assembly 10 and appropriate fitting 50. The fingers 28 are depressed by the pressure of an appropriate fitting 50 when the fitting 50 is inserted into the integrated quick connect tubing assembly 10. Once the quick connect tubing assembly 10 has been fully slid onto an appropriate fitting 50, an outwardly extending section or flange 52 on fitting 50 is held in place by flexible fingers 28 securing the flange 52 in between the inwardly extending flanges 22 and the ends of fingers 28. The quick connect tubing assembly is held in place by fingers 28 due to the resilience of fingers 28. A seal is thus formed between sealing ring 26 of the quick connect tubing assembly 10 and the outer surface 54 of the appropriate fitting 50. Integrated quick connect tubing assembly 10 may be detached from the appropriate fitting by depressing fingers 28. Fingers 28 may be depressed by sliding an optional ring (not shown) located around the axis of fitting 50 in the direction of quick connect tubing assembly 10 thereby depressing fingers 28.

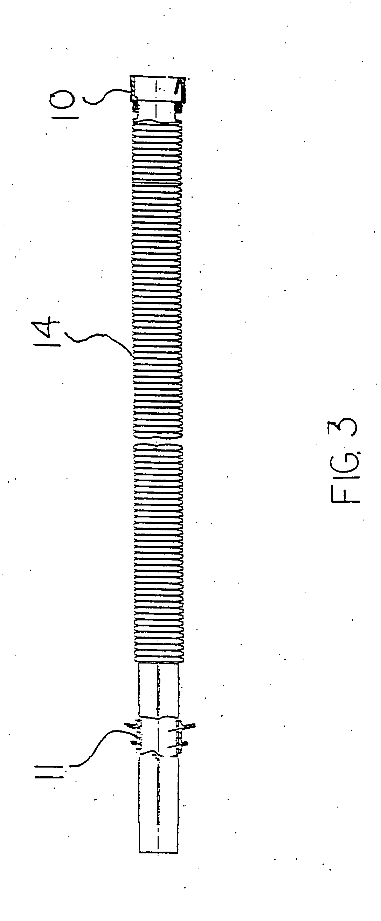

FIG. 3 is an elevational schematic representation of an integrated quick connect tubing assembly 10 according to the present invention. Corrugated tubing 14 may be fabricated in a variety of lengths and diameters in order to facilitate varying major appliance applications including clothes washing machines and dishwashers. Washing machine drain fitting 11 may also be integrated with integrated quick connect tubing assembly 10.

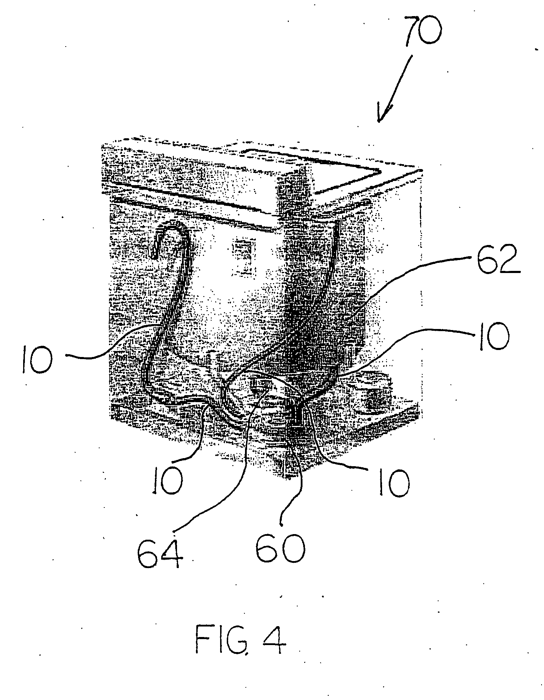

FIG. 4 is a perspective view of a household washing machine 70. Integrated quick connect corrugated tubing 10 is shown as a drain tube from the washing machine to an external drain, as a drain tube from the tub 62 of the washing machine through a drain 64 to a pump 60, and as a clean water tube from a pump 60 to the top of the tub 62.

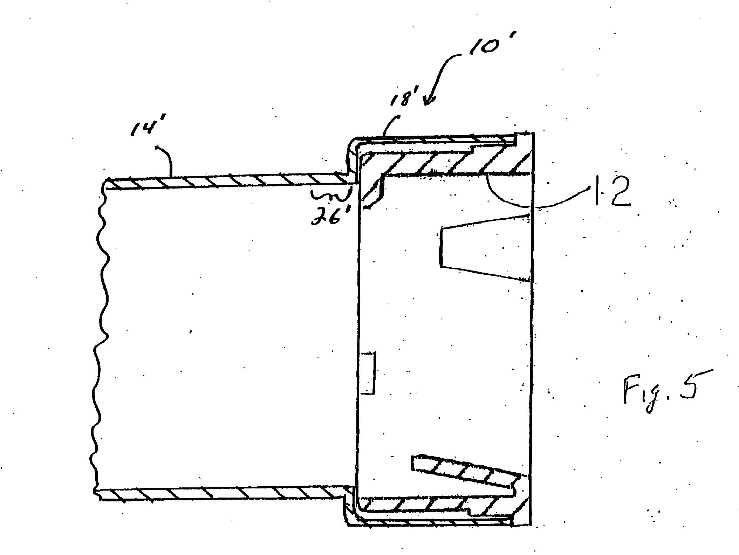

FIG. 5 shows a second embodiment of the integrated quick connect tubing assembly 10'. Integrated quick connect tubing assembly 10' is preferably formed from a thermoplastic elastomer material, such as Santoprene®, or from rubber or rubber like materials. In this second embodiment, at least a portion of tubing 14' is formed the thermoplastic elastomer material. An end of tubing 14' includes a monolithically formed quick connect sleeve or cuff 18'. Quick connect stepped retainer 12 fits within quick connect sleeve 18' and is attached as described above for integrated quick connect tubing assembly 10. Because of the properties of thermoplastic elastomer material, a seal 26 is not required. A portion 26' of thermoplastic elastomer tubing 14' acts as a sealing surface for the pump nozzle or drain connector 50.

Accordingly, although the present invention has been described above in detail, the same is by way of illustration and example only and is not to be taken as a limitation on the present invention. It is apparent to those having a level of ordinary skill in the relevant art that other variations and modifications in integrated quick connect corrugated tubing in accordance with the present invention, as described and shown herein, could be readily made using the teachings of the present invention. Accordingly, the scope and content of the present invention are to be defined only by the terms of the appended claims.

## Claims

1. In combination:
a major household cleaning appliance (70) having at least one internal component (62, 60), the at least one internal component having at least one male fitting (50) thereon: and
a tube (14) having two ends, at least one of the ends having a quick connect fitting (18, 12) thereon, the quick connect fitting releasingly engaging the at least one male fitting.

2. The combination according to claim 1, wherein the major household cleaning appliance has a plurality of internal components, the internal components each having at least one male fitting thereon, the tube having a quick connect fitting at both ends, one quick connect fitting being adapted to releasingly engage a male fitting on one internal component, the other quick connect fitting being adapted to releasingly engage a male fitting on another internal component.

3. The combination according to any of the preceding claims, wherein the tube is a drain tube adapted to drain water from within the major household cleaning appliance.

4. The combination according to any of the preceding claims, wherein the tube is a corrugated tube.

5. The combination according to any of the preceding claims, wherein the tube has at least a portion formed of thermoplastic elastomer, at least one end of the tube being formed of the thermoplastic elastomer, the at least one end of the tube being formed of the thermoplastic elastomer having a quick connect fitting thereon, the quick connect fitting retainingly and releasingly engaging the at least one male fitting, the tubing adjacent the quick connect retainer sleeve having a smaller diameter than the quick connect retainer sleeve, the tubing smaller diameter portion sealingly engaging the at least one male fitting.

6. A quick connect assembly for use in household cleaning appliances, the quick connect assembly comprising:
a quick connect fitting having a quick connect retainer sleeve (18); and a quick connect retainer (12) integrated into the sleeve,
the quick connect fitting being adapted to be removably attached to a fitting in the household cleaning appliance.

7. The quick connect assembly according to claim 6, wherein the quick connect fitting is fabricated from plastic.

8. The quick connect assembly according to claim 7, further comprising:
a length of corrugated tubing (14), wherein the quick connect retainer sleeve (18) is integral to the corrugated tubing; and, the quick connect retainer (12) is integrated into the sleeve.

9. The quick connect assembly according to claim 8, wherein the quick connect retainer sleeve is monolithic with the corrugated tubing.

10. The quick connect assembly according to any of claims 6 through 9, further comprising:
a quick connect retainer (12) integral with the sleeve (18), the quick connect retainer comprising: an outwardly extending flange (20); an inwardly extending flange (22); and an intermediate wall portion (24) connecting the outwardly extending flange and the inwardly extending flange.

11. The quick connect assembly according to any of claims 6 through 9, further comprising:
a quick connect retainer (12) attached to the interior of the quick connect sleeve (18), the quick connect retainer having a plurality of inwardly extending resilient fingers (28), the resilient fingers being adapted to retainingly and releasingly engage a male fitting.

12. The quick connect assembly according any of claims 6 through 11, further comprising:
an elastomeric sealing ring (26) adapted to sealingly engage the male fitting.

13. The quick connect assembly according to claim 12, wherein the quick connect sleeve has a stepped circular interior comprising: a quick connect retainer portion having a first inner diameter (16); a seal portion (17) having a second diameter, the second diameter being smaller than the first diameter; and a seal retaining portion (15) having a third diameter, the third diameter being smaller than the second diameter, the seal portion being between the quick connect retainer portion and the seal retaining portion, the seal retainer portion being monolithic with the length of corrugated tubing, the quick connect retainer engaging the quick connect retainer portion of the stepped circular interior.

14. The quick connect assembly according to claim 13, wherein the elastomeric sealing ring (26) fits radially within the inside diameter of the seal portion (17) of the stepped circular interior and fits axially against a shoulder (21) formed between the seal portion of the stepped circular interior and the seal retaining portion of the stepped circular interior.

15. The quick connect assembly according to claim 13, wherein the quick connect retainer has an annular shape with an outwardly extending flange (20) at one end thereof and an inwardly extending flange(22) at the other end thereof, the outwardly extending flange engaging a free end of the quick connect sleeve, the inwardly extending flange engaging a shoulder (19) formed between the quick connect retainer portion of the stepped circular interior and the seal portion of the stepped circular interior.

16. The quick connect assembly according to claim 15, wherein the quick connect retainer inwardly extending flange is formed of a plurality of discontinuous flange sections (27).

17. A method of removably attaching tubing to household cleaning appliances, the household cleaning appliance having at least one fitting, said method comprising the steps of;
providing a quick connect assembly (10) integral with a length of tubing (14), said quick connect assembly comprising: a quick connect retainer sleeve (18); and a quick connect retainer (12) integral with the sleeve; and
retainingly and removably attaching said quick connect assembly to said fitting.

18. The method according to claim 17, wherein the quick connect retainer includes a plurality of flexible fingers (28) and the step of retaining and removably attaching said quick connect assembly includes flexing the plurality of flexible fingers with an radially outwardly extending flange (52) on said at least one fitting.

19. A tubing assembly comprising:
a length of tubing (14), at least a portion of the tubing, including an end of the tubing, being formed from a thermoplastic elastomer;
a quick connect sleeve (18) monolithic with the end of the length of the tubing formed of thermoplastic elastomer; and
a quick connect retainer (12) integrated into the quick connect retainer sleeve.

20. The tubing assembly according to claim 19, wherein the quick connect retainer comprises: an outwardly extending flange (20); an inwardly extending flange (22); and an intermediate wall portion (24) connecting the outwardly extending flange with the inwardly extending flange.

21. The tubing assembly according to claim 19, wherein the quick connect retainer includes a plurality of inwardly extending resilient fingers (28), the resilient fingers being adapted to retainingly and releasingly engage a male fitting.
